# EUROPÄISCHE PATENTSCHRIFT

(11) **EP 0 412 340 B1**
(45) Veröffentlichungstag und Bekanntmachung des Hinweises auf die Patenterteilung: **28.09.1994**
(21) Anmeldenummer: 90113930.3
(22) Anmeldetag: 20.07.1990
(51) Int. Cl.: H02K 21/14

(54) **Synchronmotor, vorzugsweise elektronisch kommutierter, permanent-magneterregter Servomotor**
Synchronmotor, preferably electronically commutated servomotor with permanent magnet excitation
Moteur synchrone, de préférence de type servomoteur à commutation électronique et à excitation à aimants permanents

(30) Priorität: 05.08.1989 DE 3925959
(43) Veröffentlichungstag der Anmeldung: 13.02.1991
(73) Patentinhaber: STÖBER ANTRIEBSTECHNIK GmbH & Co., D-75177 Pforzheim (DE)
(72) Erfinder: Janky, Peter Paul, Dipl.-Ing., D-7530 Pforzheim (DE); Bäzner, Heinz, D-7543 Engelsbrand 3 (DE)
(74) Vertreter: Jackisch-Kohl, Anna-Katharina

(56) Entgegenhaltungen:
- EP-A- 0 155 877
- DE-A- 2 903 295
- Soviet Inventions Illustrated, Derwent Publications Ltd.,Section Electrical, WeekC30,Abstract NumberG5098,X11,03Sept.1980 & SU-A 702464(KRONEBERG Y.N.) 19 Juni 1978

## Beschreibung

Die Erfindung betrifft einen Synchronmotor, vorzugsweise einen elektronisch kommutierten Servomotor, nach dem Oberbegriff des Anspruches 1.

Synchronmotoren werden beispielsweise dazu eingesetzt, bei einer Bearbeitungsmaschine einen Schlitten zu verstellen. Der Rotor wird durch ein Rotorblechpaket gebildet, auf dem Permanentmagnete befestigt sind. Der Magnetfluß wird über den drehenden Rotor geschlossen, der darum aus Metall mit einer verhältnismäßig hohen Permeabilität bestehen muß. Die Rotoren sind aus diesem Grunde gewichtsmäßig schwer und haben dementsprechend auch ein hohes Trägheitsmoment. Muß beispielsweise der Schlitten mittels des Synchronmotors verstellt werden, muß der Rotor auf die erforderliche Drehzahl gebracht werden. Infolge seines hohen Trägheitsmomentes wird aber ein nicht unerheblicher Teil des Drehmomentes des Synchronmotors zur Beschleunigung des Rotors auf die gewünschte Drehzahl benötigt, so daß für den eigentlichen Verstellvorgang ein entsprechend geringerer Anteil des Drehmomentes zur Verfügung steht.

Beim gattungsgemäßen Synchronmotor (DE-A-29 03 295) ist das magnettragende Teil des Rotors in Form eines Bechers ausgebildet, dessen Boden drehfest mit der Rotorwelle verbunden ist. Das becherförmige magnettragende Teil trägt an der Innenseite die Permanentmagnete, die somit radial im magnettragenden Teil des Rotors angebracht sind. Für den Fall, daß dieses becherförmige magnettragende Teil aus hochpermeablem Material besteht, wird das magnetische Feld sowohl der Permanentmagneten als auch der Ständerwicklung zumindest geschwächt. Der Becherboden, der die Verbindung zur Rotorwelle herstellt, liegt axial außerhalb des Bereichs der Permanentmagnete, so daß der Becherboden als Rückschluß des Permanentmagnetfeldes nicht in Frage kommt. Soll der Rotor beschleunigt werden, sind darum entsprechend hohe Drehmomente erforderlich. Für die eigentliche Antriebsaufgabe des Synchronmotors steht dann aber nur ein kleinerer Teil des Drehmomentes zur Verfügung.

Bei einem anderen bekannten Synchronmotor (EP-A-0 155 877) sitzen die Permanentmagnete auf einem aus magnetischem Material bestehenden rohrförmigen Rotorteil, der unter Bildung eines Luftspaltes einen drehfesten Rotorteil umgibt, der den Magnetfluß schließt. Der aus magnetischem Material bestehende Rotorteil hat ein entsprechendes Gewicht und damit auch ein entsprechend hohes Trägheitsmoment. Darum wird auch bei diesem Synchronmotor ein erheblicher Teil des Drehmomentes zur Beschleunigung des Rotors benötigt.

Der Erfindung liegt die Aufgabe zugrunde, den gattungsgemäßen Synchronmotor so auszubilden, daß zur Beschleunigung des Rotors nur ein geringes Drehmoment benötigt wird, so daß der weitaus größte Teil des Drehmomentes für die eigentliche Antriebsaufgabe des Synchronmotors zur Verfügung steht.

Diese Aufgabe wird beim gattungsgemäßen Synchronmotor erfindungsgemäß mit den kennzeichnenden Merkmalen des Anspruches 1 gelöst.

Beim erfindungsgemäßen Synchronmotor sind die Permanentmagneten am Außenumfang des magnettragenden Teiles des Rotors vorgesehen und liegen somit radial außerhalb des Verbindungsteiles, mit dem das magnettragende Teil mit der Rotorwelle drehfest verbunden ist. Da dieses Verbindungsteil, axial gesehen, im Bereich der Permanentmagnete angeordnet ist, bietet es an dieser Stelle eine Rückschlußmöglichkeit für das Permanentmagnetfeld. Somit trägt das Verbindungsteil zur Drehmomentbildung bei. Der Anteil des Drehmomentes, der zum Antrieb zur Verfügung steht, wird auf diese Weise erhöht. Der erfindungsgemäße Synchronmotor kann darum bei einer vorgegebenen Leistung ein entsprechend hohes Drehmoment abgeben. Das zusätzlich zum Verbindungsteil vorgesehene rohrförmige Teil ist nicht magnetisch und kann darum aus gewichtsmäßig leichtem Material, beispielsweise aus Kunststoff, hergestellt werden, so daß es nur eine sehr geringe Masse hat. Dies führt zu einem nur sehr geringen Trägheitsmomemt, so daß der erfindungsgemäße Synchronmotor zur Beschleunigung des Rotors sehr geringe Drehmomente benötigt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispiels näher erläutert. Es zeigen:
- Fig. 1: im Axialschnitt einen erfindungsgemäßen Synchronmotor,
- Fig. 2: in vergrößerter Darstellung einen Schnitt längs der Linie II-II in Fig. 1,
- Fig. 3: in vergrößerter Darstellung einen Schnitt längs der Linie III-III in Fig. 1.

Der in den Zeichnungen dargestellte Synchronmotor ist bevorzugt ein elektronisch kommutierter, permanentmagneterregter Servomotor. Er hat ein Gehäuse 1, dessen beide Enden jeweils durch ein Lagerschild 2 und 3 geschlossen sind. Die beiden Lagerschilde 2, 3 sind durch Zugschrauben 4 gegen das Gehäuse 1 gespannt. Das Gehäuse 1 wird von einer Antriebswelle 5 durchsetzt, die mit Lagern 6 und 7 drehbar in den Lagerschilden 2 und 3 gelagert ist. Der Lagerschild 2 ist an seinem Ende mit einem Flansch 8 versehen, der lösbar am Lagerschild befestigt ist und das Lager 6 für die Antriebswelle 5 aufnimmt. Der andere Lagerschild 3 nimmt einen Rotorlagegeber 9 auf, der von der Antriebswelle 5 durchsetzt ist. Seitlich am Gehäuse 1 und am Lagerschild 3 sind elektrische Anschlüsse 10 und 11 vorgesehehen.

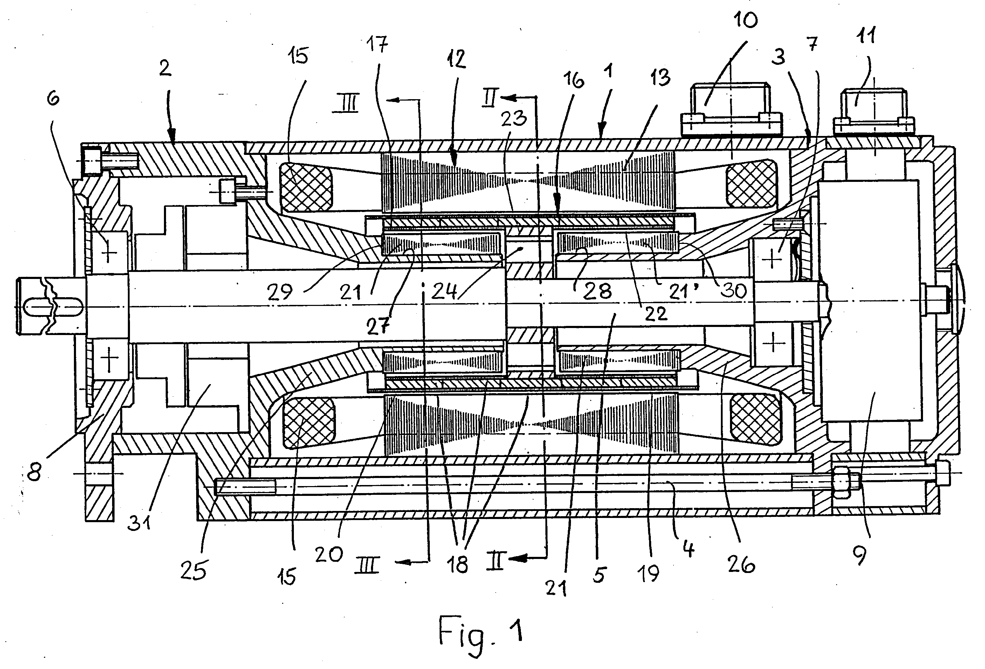

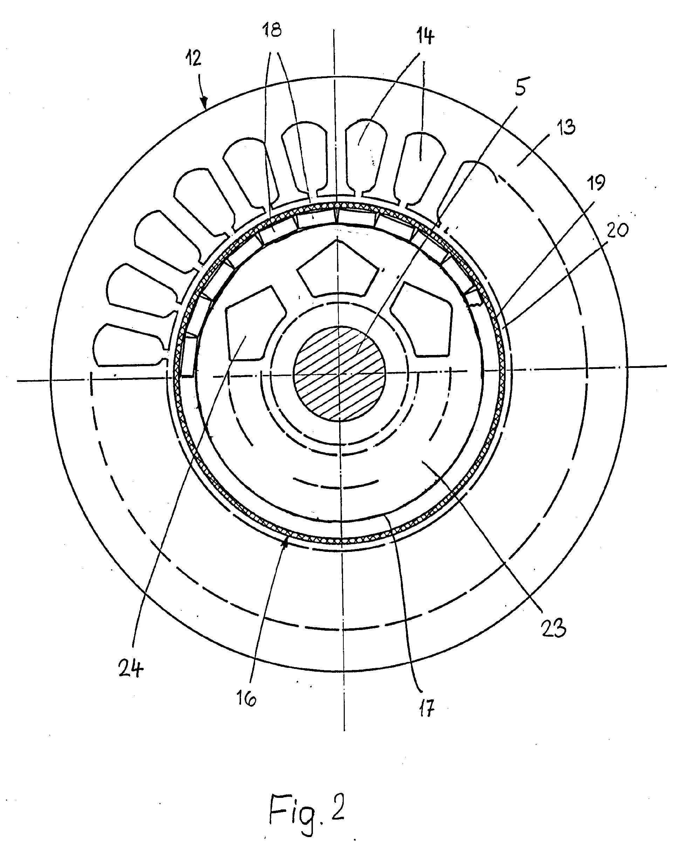

An der Innenwand des Gehäuses 1 sind die Statorbleche 13 eines Stators 12 befestigt. In Fig. 2 ist der Einfachheit halber das Gehäuse 1 nicht dargestellt. Die Statorbleche 13 haben eine übliche Ausbildung und sind mit Nuten 14 versehen, die längs des Innenumfanges des Statorpaketes 13 angeordnet sind. Die Nuten 14 werden in bekannter Weise von Wicklungen 15 (Fig. 1) durchsetzt, die sich hier in Achsrichtung des Stators 12 erstrecken. Die Wicklungen können auch auf Schraubenlinien zu einem zum Rotor konzentrischen Zylinder liegen.

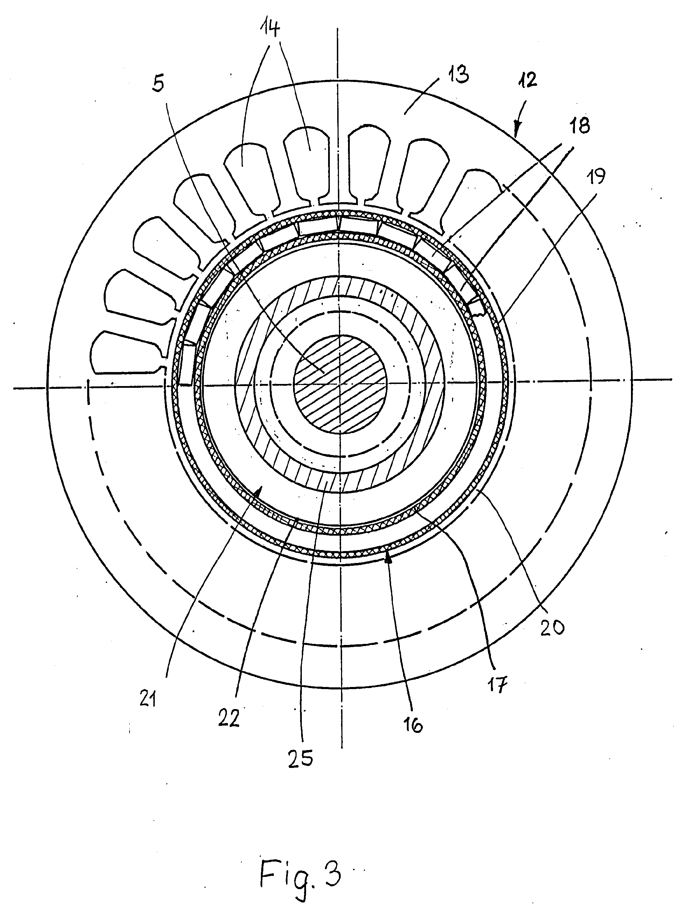

Koaxial zum Stator 12 liegt der Rotor 16, der trommelförmig ausgebildet ist und im Ausführungsbeispiel gleiche Länge hat wie das Statorpaket 13. Der Rotor 16 kann aber auch kürzer oder länger als das Statorpaket 13 sein. Der Rotor 16 hat einen dünnwandigen trommelförmigen Träger 17, auf dem Permanentmagnete 18 befestigt sind. Sie sind vorzugsweise gleich groß und in axialen Reihen angeordnet, wobei innerhalb jeder Reihe die Permanentmagnete lückenlos aneinander anschließen (Fig. 1) und hier die axialen Reihen eine Verschraubung aufweisen. Auch in Umfangsrichtung liegen die Permanentmagnetreihen aneinander an, wie Fig. 2 zeigt. In einer anderen Ausbildung ist auch eine Aneinanderreihung ringförmiger Magnetsegmente denkbar. Die Permanentmagnete 18 bestehen aus den jeweils geeigneten Materialien. Der trommelförmige Träger 17 besteht aus nichtmagnetischem Material, vorzugsweise aus einem Kohlefaserrohr, kann jedoch aus jedem anderen geeigneten, nichtmagnetischen Material bestehen, wie Glasfasern und ähnlichen Faserverbundwerkstoffen. Wesentlich ist, daß der Träger 17 aus gewichtsmäßig leichtem, aber dennoch ausreichend festem Material besteht. Wie die Fig. 1 bis 3 zeigen, ist der rohr- bzw. trommelförmige Träger 17 äußerst dünn. Dadurch hat der Rotor 16 nur eine geringe Masse, so daß sein Trägheitsmoment äußerst gering ist. Die Wandungsdicke des Trägers 17 ist vorteilhaft wesentlich kleiner als die Dicke der Permanentmagnete 18.

Vorzugsweise ist auf den Permanentmagneten 18 eine rohr- bzw. trommelförmige Halterung 19 befestigt, die ebenfalls koaxial zum Stator 13 bzw. zum Rotor 16 liegt. Diese Halterung 19 verhindert, daß die Permanentmagnete 18 bei den hohen Drehzahlen des Rotors 16 infolge der Fliehkräfte vom Träger 17 gelöst werden. Sofern die Permanentmagnete 18 ausreichend fest mit dem Träger 17 verbunden sind, kann die Halterung 19 auch entfallen. Sie überragt, wie Fig. 1 zeigt, den Träger 17 an beiden Enden vorzugsweise um ein gleiches Maß. Die Halterung 19 besteht aus nichtmagnetischem Material, vorzugsweise aus Kohlefasern, Glasfasern und ähnlichen Faserverbundwerkstoffen.

Der Stator 12 umgibt den Rotor 16 mit einem geringen Luftspalt 20. Der Rotor seinerseits umgibt unter Bildung eines weiteren Luftspaltes 22 zwei Rückschlußteile 21, 21′, die gehäusefest angeordnet sind. Die Rückschlußteile 21, 21′ bestehen jeweils aus einzelnen Ringen, die im Gegensatz zu den Statorblechen 13 des Stators 12 keine Wicklung und keine Nuten aufweisen. Die beiden Rückschlußteile 21 und 21′ liegen mit einem Axialabstand einander gegenüber (Fig. 1) und sind fluchtend zueinander angeordnet. Sie haben vorzugsweise gleiche axiale Länge und gleichen Außen- und Innendurchmesser. Zwischen den beiden Rückschlußteilen 21, 21′ befindet sich ein Ringsteg 23, mit dem der Rotor 16 drehfest mit der Antriebswelle 5 verbunden ist. Zur Gewichtsersparnis ist der Ringsteg 23 mit Durchbrechungen 24 versehen (Fig. 2), die den Ringsteg 23 axial durchsetzen. Dadurch ist sichergestellt, daß der Rotor 16 trotz des im Vergleich zum Träger 17 und zur Halterung 19 verhältnismäßig dickwandigen Ringsteges 23 nur geringe Masse hat. Der Ringsteg 23 kann an die Innenwandung des Trägers 17 angeschlossen sein, wie Fig. 2 zeigt. Es ist aber auch möglich, wie sich aus Fig. 1 ergibt, daß der Träger 17 mit einem der axialen Breite des Ringsteges 23 entsprechenden Ringspalt versehen ist, so daß der Träger 17 aus zwei Trägerteilen besteht, die an den beiden Stirnseiten des Ringsteges 23 befestigt sind. In diesem Falle sind die mittleren Permanentmagnete 18 teilweise auch auf dem Ringsteg 23 befestigt.

Infolge der beschriebenen Ausbildung wird erreicht, daß der beim Betrieb des Synchronmotors auftretende Magnetfluß durch die gehäusefesten Rückschlußteile 21 und 21′ geschlossen wird. Dies hat den Vorteil, daß der Rotor 16 äußerst geringes Gewicht hat, so daß die beim Betrieb des Synchronmotors auftretenden Trägheitsmomente sehr gering sind. Der Synchronmotor wird so eingesetzt, daß der Rotor 16 und damit die Antriebswelle 5 immer wieder beschleunigt oder abgebremst wird, um beispielsweise einen Schlitten an einer Bearbeitungsmaschine zu verstellen. Infolge des geringen Trägheitsmomentes des Rotors 16 sind zur Beschleunigung des Rotors auf die jeweiligen Drehzahlen auch entsprechend geringe Drehmomente erforderlich. Dadurch geht nur wenig Drehmoment zur Beschleunigung des Rotors verloren, so daß der weitaus größte Anteil des Drehmomentes an der Antriebswelle 5 zum Antrieb des jeweiligen anzutreibenden Teiles zur Verfügung steht. Da der Magnetfluß über die gehäusefesten, d.h. nicht rotierenden Rückschlußteile 21, 21′ geschlossen wird, muß der Rotor bzw. dessen Träger 17 nicht aus magnetischen, d.h. metallischem Material bestehen. Dadurch kann sein Gewicht extrem gering gehalten werden, so daß ein entsprechend hohes Drehmoment zum Antrieb der mit dem Synchronmotor anzutreibenden Teile zur Verfügung steht.

Die Wicklungen 15 des Stators 12 liegen vorzugsweise axial in bezug auf den Stator bzw. den Rotor 16, so daß der Stator 12 mit den Wicklungen 15 in einfacher Weise automatisch gewickelt werden kann. Die Permanentmagnete 18 sind vorteilhaft gleich ausgebildet, so daß nur eine Größe von Permanentmagneten auf Lager gehalten werden muß. Mit diesen Permanentmagneten 18 können im Druchmesser unterschiedlich große Rotoren 16 bestückt werden, weil die Permanentmagnete in Axialrichtung in Reihen nebeneinander auf dem Träger 17 angeordnet werden.

Dadurch ist eine einfache Herstellung des Rotors 16 sichergestellt, wobei der Rotor ohne Schwierigkeiten für unterschiedlich große Synchronmotoren gefertigt werden kann.

Die Rückschlußteile 21 und 21′ sind auf dem Lagerschild 3 befestigt. Beide Lagerschilde haben einen in das Gehäuse 1 ragenden rohrförmigen Ansatz 25 und 26, der zunächst konisch verjüngt ausgebildet ist und am freien Ende in einen zylindrischen Endabschnitt übergeht, der außenseitig mit einer umlaufenden Vertiefung 27 und 28 versehen ist. Sie erstreckt sich bis zur Stirnseite des Ansatzes 25 bzw. 26. In die Vertiefungen 27 und 28 sind die Rückschlußteile 21 und 21′ so eingesetzt, daß sie am radial verlaufenden Boden 29 und 30 der Vertiefungen anliegen (Fig. 1). Die Rückschlußteile 21, 21′ ragen radial geringfügig aus der Vertiefung 27 und 28 heraus.

Da die Lageschilde 2 und 3 lösbar mit dem Gehäuse 1 verbunden sind, lassen sich die Rückschlußteile 21 und 21′ außerhalb des Gehäuses 1 mühelos auf den Ansätzen 25 und 26 befestigen. Anschließend können die Lagerschilde 2, 3 mit den montierten Rückschlußteilen 21, 21′ einfach an das Gehäuse 1 angeschlossen und mit den Zugschrauben gegen das Gehäuse 1 verspannt werden. Da der Rotor 16 trommel- bzw. rohrförmig ausgebildet ist, müssen die Luftspalte 20 und 22 zwischen ihm und dem Stator 12 sowie den Rückschlußteilen 21, 21′ nicht genau eingehalten werden. Da es sich hierbei um rotationssymmetrische Bauteile handelt, sind auch die entstehenden Radialkräfte symmetrisch und heben sich daher in ihrer Wirkung auf den Rotor wechselseitig auf. Konzentrische Passungen sind bei rotationssymmetrischen Teilen sehr einfach genau herstellbar, so daß der Rotor 16 äußerst ruhig läuft.

Im Lagerschild 2 ist eine Bremse 31 für die Antriebswelle 5 untergebracht. Vorzugsweise wird die Bremse durch eine Permanentmagnetbremse gebildet.

Mit dem beschriebenen Synchronmotor werden bei einem gegebenen Trägheitsmoment des Rotors 16 sehr hohe Drehmomente erzielt. Bei den herkömmlichen Synchronmotoren mit trommel- bzw. rohrförmigen Rotoren liegt das Verhältnis dM/dJ in der Größenordnung von etwa 0,5 bis 0,6 Nm/kgcm². Bei dem beschriebenen Synchronmotor liegt dieses Verhältnis von Drehzahl zu Trägheitsmoment in der Größenordnung von etwa 1,1 bis 1,3 Nm/kgcm². Der Synchronmotor gibt somit bei einem vorgegebenen Trägheitsmoment J ein mehr als doppelt so großes Drehmoment M ab als die herkömmlichen Synchronmotoren mit trommelförmigem Rotor. Darum kann der beschriebene Synchronmotor in wesentlich kürzeren Zeiten das jeweils erforderliche Drehmoment abgeben, um beispielsweise den Schlitten einer Bearbeitungsmaschine zu verstellen.

Aufgrund des beschriebenen Konstruktionsprinzips weist dieser Motor eine niedrige Induktivität und damit eine entsprechend kleine elektrische Zeitkonstante (L/R) auf.

## Patentansprüche

1. Synchronmotor, vorzugsweise elektronisch kommutierter Servomotor, mit einem Stator (12), der einen mit Permanentmagneten (18) bestückten Rotor (16) umgibt, dessen magnettragendes Teil (17) im wesentlichen rohrförmig ausgebildet und drehfest mit der Rotorwelle (5) verbunden ist, und mit mindestens einem statorfesten Rückschlußteil (21, 21′), das in den Rotor (16) ragt,
dadurch gekennzeichnet, daß das magnettragende Teil, das an seinem Außenumfang die Permanentmagnete (18) trägt, aus mindestens einem nichtmagnetischen rohrförmigen Teil (17) und aus einem Verbindungsteil (23) besteht, das aus einem Material hoher magnetischer Permeabilität gefertigt ist und das rohrförmige Teil (17) axial im Bereich der Permanentmagnete (18) mit der Rotorwelle (5) drehfest verbindet.

2. Synchronmotor nach Anspruch 1,
dadurch gekennzeichnet, daß der statorfeste, den Magnetfluß schließende Teil durch zwei mit axialem Abstand nebeneinander liegende Rückschlußteile (21, 21′) gebildet ist, die vorzugsweise gleich ausgebildet sind.

3. Synchronmotor nach Anspruch 1 oder 2,
dadurch gekennzeichnet, daß das Verbindungsteil (23) ein Ringsteg ist.

4. Synchronmotor nach einem der Ansprüche 1 bis 3,
dadurch gekennzeichnet, daß das Verbindungsteil (23) mindestens eine Durchbrechung (24) aufweist.

5. Synchronmotor nach einem der Ansprüche 2 bis 4,
dadurch gekennzeichnet, daß das Verbindungsteil (23) zwischen den beiden statorfesten Rückschlußteilen (21, 21′) liegt.

6. Synchronmotor nach einem der Ansprüche 2 bis 5,
dadurch gekennzeichnet, daß die Rückschlußteile (21, 21′) jeweils an einem Träger (2, 3), vorzugsweise einem Lagerschild, befestigt sind.

7. Synchronmotor nach Anspruch 6,
dadurch gekennzeichnet, daß die Träger (2, 3) jeweils einen Ansatz (25, 26) aufweisen, auf dem der jeweilige Rückschlußteil (21, 21′) befestigt ist.

8. Synchronmotor nach Anspruch 6 oder 7,
dadurch gekennzeichnet, daß die Träger (2, 3) lösbar an einem Gehäuse (1) des Synchronmotors befestigt sind.

9. Synchronmotor nach einem der Ansprüche 1 bis 8,
dadurch gekennzeichnet, daß das rohrförmige Teil (17) aus Kohlefasern, Glasfasern und ähnlichen Faserverbundwerkstoffen besteht.

10. Synchronmotor nach einem der Ansprüche 1 bis 9,
dadurch gekennzeichnet, daß die Permanentmagnete (18) von einer rohr- bzw. trommelförmigen Halterung (19) umgeben sind.

11. Synchronmotor nach Anspruch 10,
dadurch gekennzeichnet, daß die Halterung (19) aus nichtmagnetischem Material, vorzugsweise Kohlefasern, Glasfasern und ähnlichen Faserverbundwerkstoffen, besteht.

12. Synchronmotor nach Anspruch 10 oder 11,
dadurch gekennzeichnet, daß die Halterung (19) durch ein dünnwandiges Rohrstück gebildet ist.

13. Synchronmotor nach einem der Ansprüche 1 bis 12,
dadurch gekennzeichnet, daß die Wicklungen (15) des den Rotor (16) umgebenden Stators (12) in einem zum Stator koaxialen Zylinder liegen.

## Claims

1. A synchronous motor, preferably an electronically commutated servomotor, with a stator (12), which surrounds a rotor (16) fitted with permanent magnets (18), the magnet-supporting part (17) of the rotor being substantially tubular and being rotationally rigidly connected to the rotor shaft (5), and with at least one back-circuit element (21, 21′) which is fixed to the stator and projects into the rotor (16), characterised in that the magnet-supporting part, which supports the permanent magnets (18) on its circumference, is formed by at least one non-magnetic tubular part (17) and a connecting part (23), which is made of a material of high magnetic permeability and rotationally rigidly connects the tubular part (17) axially in the region of the permanent magnets (18) to the rotor shaft (5).

2. A synchronous motor according to claim 1, characterised in that the part fixed to the stator and closing the magnetic flux is formed by two back-circuit elements (21, 21′), which are arranged adjacent one another axially spaced apart and are preferably of like construction.

3. A synchronous motor according to claim 1 or 2, characterised in that the connecting part (23) is an annular web.

4. A synchronous motor according to one of claims 1 to 3, characterised in that the connecting part (23) comprises at least one aperture (24).

5. A synchronous motor according to one of claims 2 to 4, characterised in that the connecting part (23) is arranged between the two back-circuit elements (21, 21′) fixed to the stator.

6. A synchronous motor according to one of claims 2 to 5, characterised in that the back-circuit elements (21, 21′) are secured in each case to a support (2, 3), preferably a bearing plate.

7. A synchronous motor according to claim 6, characterised in that the supports (2, 3) each comprise an extension (25, 26), to which the respective back circuit element (21, 21′) is secured.

8. A synchronous motor according to claim 6 or 7, characterised in that the supports (2, 3) are detachably secured to a housing (1) of the synchronous motor.

9. A synchronous motor according to one of claims 1 to 8, characterised in that the tubular part (17) is made of carbon fibres, glass fibres and similar compound fibre materials.

10. A synchronous motor according to one of claims 1 to 9, characterised in that the permanent magnets (18) are surrounded by a tubular or drum-shaped holder (19).

11. A synchronous motor according to claim 10, characterised in that the holder (19) is made of non-magnetic material, preferably carbon fibres, glass fibres and similar compound fibre materials.

12. A synchronous motor according to claim 10 or 11, characterised in that the holder (19) is formed by a thin-walled tubular element.

13. A synchronous motor according to one of claims 1 to 12, characterised in that the windings (15) of the stator (12) surrounding the rotor (16) are arranged in a cylinder coaxial to the stator.

## Revendications

1. Moteur synchrone, de préférence servomoteur à commutation électronique, comprenant un stator (12) qui entoure un rotor (16) équipé d'aimants permanents (18), dont la partie (17) qui porte les aimants est réalisée sensiblement sous la forme de tube et est reliée solidaire en rotation à l'arbre (5) du rotor, et comportant au moins une pièce de bouclage (21, 21′) solidaire du stator, qui fait saillie dans le rotor (16), caractérisé en ce que la partie porteuse des aimants, qui porte les aimants permanents (18) sur sa périphérie extérieure est formée par au moins une partie (17) non magnétique en forme de tube et par une pièce de raccordement (23) qui est fabriquée en un matériau à haute perméabilité magnétique et qui relie solidairement en rotation la partie (17) en forme de tube avec l'arbre (5) du rotor, axialement dans la région des aimants permanents (18).

2. Moteur synchrone selon la revendication 1, caractérisé en ce que la partie solidaire du stator qui ferme le flux magnétique est formée par deux pièces de bouclage (21, 21′) qui se jouxtent avec un écartement axial et qui sont de préférence réalisées identiques.

3. Moteur synchrone selon la revendication 1 ou 2, caractérisé en ce que la pièce de raccordement (23) est un voile annulaire.

4. Moteur synchrone selon l'une des revendications 1 à 3, caractérisé en ce que la pièce de raccordement (23) présente au moins une ouverture (24).

5. Moteur synchrone selon l'une des revendications 2 à 4, caractérisé en ce que la partie de raccordement (23) est située entre les deux pièces de bouclage (21, 21′) solidaires du stator.

6. Moteur synchrone selon l'une des revendications 2 à 5, caractérisé en ce que les pièces de bouclage (21, 21′) sont chacune fixées sur un support (2, 3), de préférence un flasque de montage.

7. Moteur synchrone selon la revendication 6, caractérisé en ce que les supports (2, 3) présentent chacun un prolongement (25, 26) sur lequel est fixé la pièce de bouclage (21, 21′) respective.

8. Moteur synchrone selon la revendication 6 ou 7, caractérisé en ce que les supports (2, 3) sont fixés de manière détachable sur un boîtier (1) du moteur synchrone.

9. Moteur synchrone selon l'une des revendications 1 à 8, caractérisé en ce que la partie (17) en forme de tube est en fibres de carbone, fibres de verre ou matériaux composites similaires renforcés par des fibres.

10. Moteur synchrone selon l'une des revendications 1 à 9, caractérisé en ce que les aimants permanents (18) sont entourés par une fixation (19) en forme de tube ou de tambour.

11. Moteur synchrone selon la revendication 10, caractérisé en ce que la fixation (19) est en un matériau non magnétique, de préférence en fibres de carbone, fibres de verre ou matériaux composites similaires renforcés par des fibres.

12. Moteur synchrone selon la revendication 10 ou 11, caractérisé en ce que la fixation (19) est formée par un tube à paroi mince.

13. Moteur synchrone selon l'une des revendications 1 à 12, caractérisé en ce que les enroulements (15) du stator (12) entourant le rotor (16) se trouvent dans un cylindre coaxial par rapport au stator.
